# EUROPÄISCHE PATENTSCHRIFT

(11) **EP 0 678 954 B1**
(45) Veröffentlichungstag und Bekanntmachung des Hinweises auf die Patenterteilung: **02.09.1998**
(21) Anmeldenummer: 94110057.0
(22) Anmeldetag: 29.06.1994
(51) Int. Cl.: H02B 13/035

(54) **Metallgekapselte gasisolierte Schaltanlage**
Metal-clad gas-insulated switch installation
Appareillage de commutation blindé métallique à isolement gazeux

(30) Priorität: 19.04.1994 CH 1218/94
(43) Veröffentlichungstag der Anmeldung: 25.10.1995
(73) Patentinhaber: ASEA BROWN BOVERI AG, 5400 Baden (CH)
(72) Erfinder: Berger, Ernst, CH-5507 Mellingen (CH); Heil, Franz, CH-5406 Baden-Rütihof (CH); Schifko, Herbert, CH-8152 Glattbrugg (CH); Tecchio, Piero, CH-5452 Oberrohrdorf (CH)

(56) Entgegenhaltungen:
- EP-A- 0 175 159
- EP-A- 0 563 535
- DE-A- 2 540 058
- DE-A- 3 034 021
- FR-A- 1 440 652
- GB-A- 844 098
- BBC-NACHRICHTEN, Bd.53, Nr.1/2, Februar 1971 Seiten 3 - 14 WILLI J. SCHMITT ET AL. 'Vollgekapselte, SF6-isolierte 110-kV-Schaltanlagen in der Energieversorgung'

## Beschreibung

Die Erfindung geht aus von einer metallgekapselten gasisolierten Schaltanlage gemäss dem Oberbegriff des Anspruchs 1.

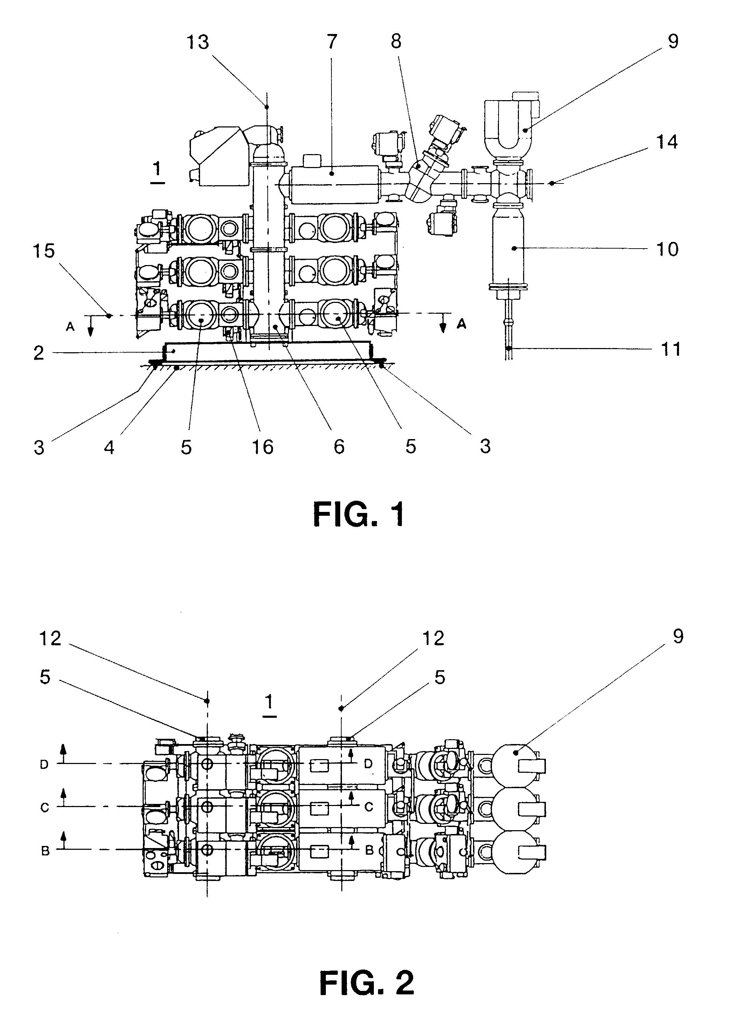

Es sind einphasig metallgekapselte gasisolierte Schaltanlagen mit senkrecht stehenden Leistungsschaltern bekannt, die ein Doppelsammelschienensystem aufweisen. Eine derartige Schaltanlage ist beispielsweise aus der Fachzeitschrift "E und M", Jahrgang 102, Heft 7/8, Seite 305, Abbildung 2, bekannt. Die Polachse der Leistungsschalter steht senkrecht und die Betätigung der Leistungsschalter erfolgt von unten her. Die Polachsen liegen in einer Ebene. Die Sammelschienensysteme weisen Sammelschienenachsen auf, die in Ebenen liegen, die sich parallel zu der Fundamentfläche und senkrecht zu der Ebene in welcher die Polachsen liegen, erstrecken. Von jedem Leistungsschalterpol führt zu den zugeordneten Sammelschienen ein aufwendiges metallgekapseltes Verbindungsstück. Diese Verbindungsstücke weisen für jede Phase eine unterschiedliche Länge auf. Zwischen dem den Sammelschienen zugewandten Ende des jeweiligen Verbindungsstücks und jeder der Sammelschienen ist ein Sammelschienentrenner vorgesehen. Das den Sammelschienen zugewandte Ende des jeweiligen Verbindungsstücks kann mittels eines Erders geerdet werden. Die Abgänge bzw. die Einspeisungen verlassen den Leistungsschalter alle in einer bestimmten Höhe. Die Verbindungsstücke sind an den Leistungsschalter ebenfalls alle in der gleichen zur Fundamentfläche parallelen Ebene angeschlossen. Die Polgehäuse des Leistungsschalters sind demnach alle gleich ausgebildet.

Eine derartige metallgekapselte gasisolierte Schaltanlage benötigt wegen der vorgegebenen Geometrie vergleichsweise viel Platz. Die Verbindungsstücke zu den Sammelschienen verteuern die Schaltanlage.

Die Offenlegungsschrift DE 2 540 058 zeigt eine dreiphasig metallgekapselte gasisolierte Schaltanlage, welche zwei parallel zur Oberfläche eines Fundaments verlaufende Sammelschienensysteme aufweist. Diese Sammelschienen liegen senkrecht übereinander in zwei parallelen Ebenen. In der Mitte zwischen diesen beiden Ebenen liegt eine weitere parallel angeordnete Ebene in welcher die Polachsen der Leistungsschalter angeordnet sind. Die Leistungsschalter sind gemeinsam in einem Gehäuse untergebracht. Die Anschlüsse zwischen den Leistungsschalterpolen und den diesen jeweils in verschiedenen Höhen zugeordneten Sammelschienen werden mittels verschieden langen, in Richtung der Polachsen angeordneten Anschlussteilen, sichergestellt, wobei jeder der Leistungsschalterpole mit unterschiedlich langen Anschlussteilen versehen werden muss.

Aus der Schrift FR-A-1 440 652 ist eine einphasig metallgekapselte gasisolierte Schaltanlage bekannt, die in einem vorgegebenen Raster aufgebaut ist. Das Konzept dieser Schaltanlage erlaubt einen kompakten Aufbau derselben, die Zugänglichkeit mancher Anlagekomponenten ist jedoch, bedingt durch die Anordnung der Sammelschienen in parallel zur Oberfläche des Fundaments gelegenen Ebenen, beschränkt.

Aus den BBC-Nachrichten, Januar/Februar 1971, Seiten 1 bis 14, insbesondere aus der Fig.4, ist eine metallgekapselte gasisolierte Schaltanlage bekannt mit zwei dreiphasig metallgekapselten Sammelschienensystemen. Die Leistungsschalter dieser bekannten Schaltanlage sind einphasig metallgekapselt. Die Gehäuse dieser Leistungsschalter sind aus verschiedenen Elementen, jedoch alle identisch aufgebaut.

Aus der Schrift EP-A-0 175 159 ist eine metallgekapselte gasisolierte Schaltanlage bekannt, bei welcher die Ebene in welcher die Polachsen der Leistungsschalter liegen, schräg zur Richtung der Achsen der Verbindungsteile zu den Sammelschienen bzw. den Zu- oder Abgängen angeordnet ist.

### DARSTELLUNG DER ERFINDUNG

Die Erfindung, wie sie in dem unabhängigen Anspruch gekennzeichnet ist, löst die Aufgabe, eine metallgekapselte gasisolierte Schaltanlage zu schaffen, die mit einfachen Mitteln so ausgebildet werden kann, dass sie einen wesentlich kleineren Platzbedarf aufweist.

Die durch die Erfindung erreichten Vorteile sind darin zu sehen, dass die bei konventionellen gasisolierten Schaltanlagen nötigen Verbindungsgehäuse, welche die unterschiedlichen Abstände zwischen den Leistungsschalterpolen und den Sammelschienen überbrücken, nicht mehr benötigt werden. Infolge des Wegfallens dieser Verbindungsgehäuse wird eine dichtere Packung der in der gasisolierten Schaltanlage installierten Apparate möglich.

Diese metallgekapselte gasisolierte Schaltanlage ist mit mindestens einem Sammelschienensystem versehen, welches einen Achsabstand s aufweist, ferner mit einem Leistungsschalter, der pro Pol jeweils eine Polachse, mindestens eine in ein Polgehäuse eingebaute Löschkammer und mindestenseinen auf einer Verbindungsachse liegenden Anschluss für die jeweils zugeordnete Sammelschiene aufweist und dessen Polachsen senkrecht zu einem Fundament angeordnet sind und in einer ersten Ebene liegen. Zudem weist die gasisolierte Schaltanlage jeweils ein entlang der Verbindungsachse erstrecktes elektrisch leitendes Verbindungsteil auf, welches den mindestens einen Anschluss des jeweiligen Pols mit dem mindestens einen der Sammelschienensysteme verbindet, und ferner jeweils einen in der Verbindung zwischen der mindestens einen Sammelschiene und dem Pol angeordneten Trenner. Die Sammelschienenachsen des mindestens einen Sammelschienensystems verlaufen parallel zur Fundamentfläche und liegen in mindestens einer weiteren Ebene. Die erste Ebene, in welcher die Polachsen liegen, ist parallel zu der mindestens einen weiteren Ebene angeordnet, und die Anschlüsse für die Sammelschienen liegen auf einer Diagonalen.

Bei dieser metallgekapselten gasisolierten Schaltanlage sind von Pol zu Pol unterschiedlich hoch angeordnete Anschlüsse für die jeweils zugeordnete Sammelschiene vorgesehen, und diese Unterschiede werden allein durch Modifikationen im Aufbau der Pole erzielt, ohne separate und variable Verbindungsteile einzusetzen.

Als besonders vorteilhaft erweist es sich, dass zwei Sammelschienensysteme jeweils in einer zweiten Ebene und in einer dritten Ebene angeordnet sind, und dass die erste Ebene, in welcher die Polachsen liegen, in der Mitte zwischen der zweiten und der dritten Ebene angeordnet ist.

Eine besonders wirtschaftliche Lösung ergibt sich daraus, dass jeder Anschluss mit einem entlang der senkrecht zu diesen Ebenen verlaufenden Verbindungsachsen sich erstreckenden Verbindungsteil verbunden ist, und dass alle diese Verbindungsteile die gleiche Baulänge aufweisen.

Jedes der Polgehäuse eines dreipoligen Leistungsschalters ist jeweils aus einem mit den Anschlüssen bestückten Gehäuseunterteil, mindestens einem Gehäuseoberteil und einem Gehäusedeckel aufgebaut, wobei der Gehäusedeckel als Gleichteil in jedem der Polgehäuse eingebaut ist, und ferner das Gehäuseunterteil als Gleichteil zuunterst in jedem der Polgehäuse eingebaut ist, jedoch nicht in gleicher Einbaulage.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine Seitenansicht eines Abgangsfeldes einer gasisolierten Schaltanlage,
Fig.2 eine Draufsicht auf ein Abgangsfeld einer gasisolierten Schaltanlage,
Fig.3 eine schematische Darstellung des in Fig.1 eingetragenen Schnittes A-A,
Fig.4 eine schematische Darstellung des in Fig.2 eingetragenen Schnittes B-B,
Fig.5 eine schematische Darstellung des in Fig.2 eingetragenen Schnittes C-C, und
Fig.6 eine schematische Darstellung des in Fig.2 eingetragenen Schnittes D-D.

Bei allen Figuren sind gleich wirkende Elemente mit gleichen Bezugszeichen versehen. Alle für das unmittelbare Verständnis der Erfindung nicht-erforderlichen Elemente sind nicht dargestellt.

### WEGE ZUR AUSFÜHRUNG DER ERFINDUNG

Die Fig.1 zeigt eine schematisch dargestellte Seitenansicht eines Abgangsfeldes 1 einer einphasig metallgekapselten gasisolierten Schaltanlage und die Fig.2 zeigt eine Draufsicht auf dieses Abgangsfeld 1. Dieses Abgangsfeld 1 weist einen Tragrahmen 2 auf, der aus einem Metallprofil gefertigt ist. Als besonders geeignete Metallprofile können beispielsweise I-Profile oder Rohrprofile aus Stahl eingesetzt werden. Die Rohrprofile weisen in der Regel einen runden oder einen rechteckigen Querschnitt auf. An den Ecken des Tragrahmens 2 sind Winkelprofile 3 angebracht, welche der Verbindung des Tragrahmens 2 mit einem Fundament 4 dienen. Diese Verbindung kann kraftschlüssig ausgebildet sein, sie kann jedoch auch ein Gleiten des Tragrahmens 2 auf einer in das Fundament 4 eingelassenen und hier nicht dargestellten Tragschiene zulassen. Bei diesem Typ einer metallgekapselten und gasisolierten Schaltanlage sind die Sammelschienen 5 senkrecht übereinander an einer oder an beiden Seiten der senkrecht gestellten Pole des Leistungsschalters 6 angeordnet. Der Abgang ist mit einem Stromwandler 7 versehen, dem ein Trenner 8, der die Funktion des Abgangstrenners übernimmt, nachgeschaltet ist. Beidseits des Trenners 8 ist jeweils ein Erder vorgesehen. Nach dem Trenner 8 ist ein Spannungswandler 9 vorgesehen. Ein Kabelanschluss 10 verbindet das abgehende Hochspannungskabel 11 mit der gasisolierten Schaltanlage. Ein für eine Einspeisung vorgesehenes Feld ist ähnlich ausgebildet wie das beschriebene Abgangsfeld 1.

Die Sammelschienen 5 weisen jeweils eine Sammelschienenachse 12 auf. Die Sammelschienenachsen 12 eines jeden der beiden Sammelschienensysteme liegen in einer Ebene senkrecht übereinander. Die Pole des Leistungsschalters 6 weisen jeweils eine Polachse 13 auf. Die Polachsen 13 der drei Leistungsschalterpole liegen in einer Ebene, die senkrecht zum Fundament 4 steht. Die Ebenen in denen die Sammelschienensysteme liegen und die Ebene in der die Polachsen 13 liegen, sind bei diesem Abgangsfeld 1 parallel zueinander angeordnet. Der vom jeweiligen Leistungsschalterpol wegführende Teil des Abgangsfelds 1, der Stromwandler 7, der Trenner 8 und das Gehäuse an welches der Kabelanschluss 10 angeflanscht ist, erstreckt sich entlang einer Längsachse 14. Die Längsachse 14 steht senkrecht auf der jeweiligen Polachse 13. Der vom Leistungsschalter 6 wegführende Teil des Abgangs kann sich in die Richtung, wie in Fig.1 dargestellt, erstrecken, er kann sich jedoch auch in die entgegengesetzte Richtung erstrecken. Der obere Teil des Polgehäuses, welches sich aus Gehäuseoberteil und Gehäusedeckel zusammensetzt, lässt sich bei der Montage entsprechend ausrichten. In der Regel wird eine Drehung um 180° um die Polachse 13 vorgenommen, es ist aber auch möglich, den oberen Teil des Polgehäuses um einen Winkel im Bereich um 180° abzudrehen. Da der Leistungsschalter 6 pro Pol mit einem separaten Antrieb versehen ist, kann jeder der Pole unterschiedlich ausgerichtete Abgänge aufweisen.

Bei einem Speisefeld, welches ähnlich dem Abgangsfeld 1 aufgebaut ist, und bei welchem sich entlang der jeweiligen Längsachse 14 die Einspeisung erstreckt, beispielsweise bis hin zu Durchführungen, die mit einer Freileitung verbunden sind, wirkt sich diese Möglichkeit des Drehens des oberen Teils des Polgehäuses besonders vorteilhaft aus, da auf diese Art auch in Schaltanlagen mit beengten Raumverhältnissen für die Einführung der Freileitung hinreichende Phasenabstände einfach zu realisieren sind.

Die Verbindung von dem jeweiligen Leistungsschalterpol zu den Sammelschienen erstreckt sich entlang einer Verbindungsachse 15. Aus der Fig.1 ist ersichtlich, dass bei diesem mit einem Doppelsammelschienensystem ausgerüsteten Abgangsfeld 1 nur ein Erder 16 pro Verbindung vorgesehen ist. Bei dieser gasisolierten Schaltanlage wird einer der in diesem Bereich normalerweise nötigen zwei Erder, ohne eine Einbusse an Sicherheit und ohne die Verfügbarkeit der Anlage zu reduzieren, eingespart. Der Erder 16 kann bei einer Schaltanlage mit Doppelsammelschienensystem wahlweise entweder auf der einen oder auf der anderen Seite des Leistungsschalterpols eingebaut werden.

Wird das Schaltfeld als Kuppelfeld aufgebaut, so reicht der auf der einen Seite des Leistungsschalterpols für den Erder vorgesehene Platz aus, um das Polgehäuse mit einem Deckel druckdicht zu verschliessen, für die Sammelschiene bleibt noch genug Platz, sodass auch in einem Kuppelfeld die Sammelschienenachse 12 unverändert im Vergleich zu den Speise- und den Abgangsfeldern beibehalten werden kann.

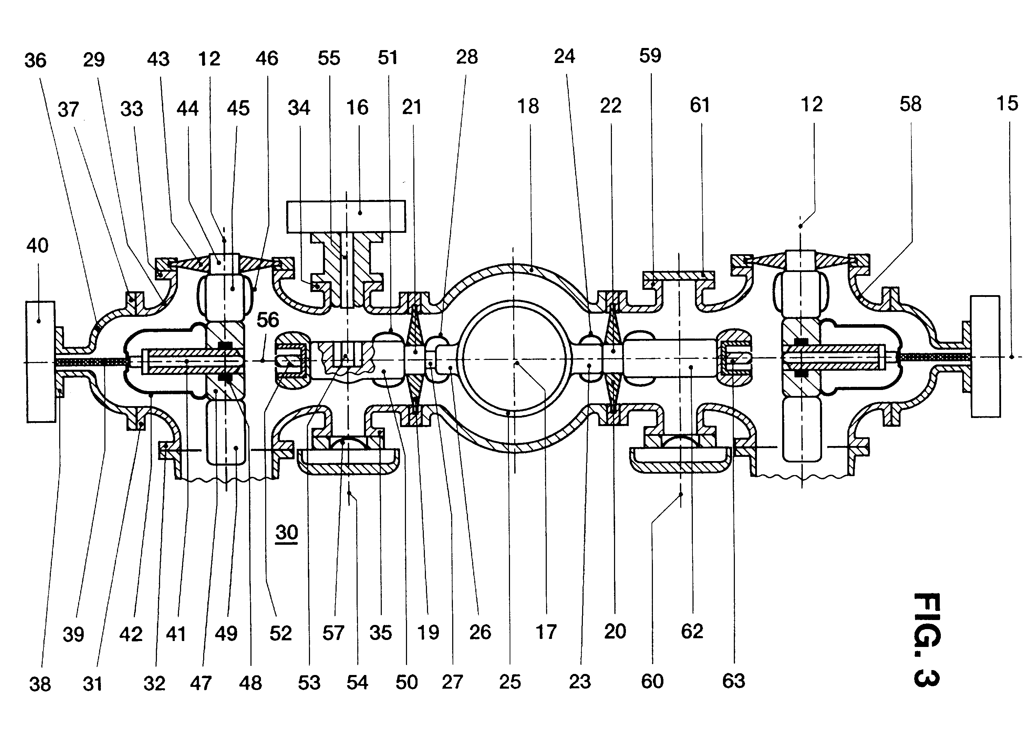

Die Fig.3 zeigt eine schematische Darstellung des in Fig.1 eingetragenen Schnittes A-A. Die Polachse 13 steht senkrecht auf der Schnittebene, sie durchstösst diese in einem zentralen Punkt 17. Ein zylindrisch ausgebildetes Gehäuseunterteil 18, welches sich entlang der Polachse 13 erstreckt, ist mit zwei auf der Verbindungsachse 15 als Zentrum liegenden, nicht bezeichneten Öffnungen versehen, die jeweils mit einem zylindrisch ausgebildeten, scheibenförmigen Schottungsisolator 19,20 druckdicht zugeflanscht sind. Der Schottungsisolator 19 weist einen ihn im Zentrum durchdringenden Stromanschluss 21 auf. Der Schottungsisolator 20 weist einen ihn im Zentrum durchdringenden Stromanschluss 22 auf. An den Stromanschluss 22 ist ein elektrisch leitendes Verbindungsstück 23 angeschraubt, welches von einer dielektrisch günstig gestalteten Abschirmung 24 umgeben ist. Das Verbindungsstück 23 ist mit einem Kontaktring 25 aus einem elektrisch gut leitfähigen Metall fest verschraubt. Das Verbindungsstück 23 und der Kontaktring 25 können auch einstückig ausgebildet sein. Der Kontaktring 25 weist auf der dem Verbindungsstück 23 gegenüberliegenden Seite eine mit ihm verschraubte Kontaktanordnung 26 auf. Der Stromanschluss 21 ist mit einem Kontaktträger 27 verbunden, der beispielsweise mit Spiralkontakten bestückt ist. Die Kontaktanordnung 26 umschliesst den Kontaktträger 27 und bildet mit ihm einen lösbaren Steckkontakt, der von einer dielektrisch günstig gestalteten Abschirmung 28 umgeben ist.

Der Mittelpunkt des Kontaktrings 25 fällt mit dem zentralen Punkt 17 zusammen. Die zylindrisch ausgebildete Innenfläche des Kontaktrings 25 ist mit mindestens einer nicht dargestellten Nut versehen, in welche ein nicht dargestellter Kunststoffring eingeklebt ist. Der Kunststoffring führt beim Einbau der Löschkammer das elektrisch leitende Auspuffgehäuse derselben, welches aussen mit elastischen Kontaktelementen bestückt ist, beispielsweise mit Spiralkontakten, die mit dem Kontaktring 25 einen elektrischen Kontakt herstellen, und er verhindert, dass die elastischen Kontaktelemente einer unsymmetrischen mechanischen Belastung unterworfen werden. Die innere Öffnung des Kontaktrings 25 wird durch das mit der Löschkammer verbundene Auspuffgehäuse vollständig verschlossen. Auf der dem Kontaktträger 27 entgegengesetzten Seite des Schottungsisolators 19 ist das Gehäuse 29 eines als Winkeltrenner ausgebildeten Trenners 30 druckdicht angeflanscht.

Das vereinfacht dargestellte Gehäuse 29 des Trenners 30 weist eine Wandung aus Metall auf. In der Regel wird das Gehäuse 29 druckdicht aus einer Aluminiumlegierung gegossen. Das Gehäuse 29 weist ausser der mit dem Schottungsisolator 19 verschlossenen Öffnung fünf weitere nicht bezeichnete mit Flanschen 31 bis 35 versehene Öffnungen auf. Das Gehäuse 29 weist zudem eine Längsachse auf, welche mit der Verbindungsachse 15 zusammenfällt. Die mit dem Flansch 31 versehene Öffnung wird bei der Trennermontage mit einer metallischen Abdeckung 36 versehen, die einen Flansch 37 aufweist, der mit dem Flansch 31 gasdicht verschraubt wird. Gegenüber dem Flansch 37 ist an der Abdeckung 36 ein weiterer Flansch 38 angebracht. Der Flansch 38 dient der Befestigung einer druckfesten Durchführung für eine bei einem Schaltvorgang des Trenners 30 in Richtung einer mit der Verbindungsachse 15 zusammenfallenden Betätigungsachse bewegbaren Isolierstoffstange 39. Die Isolierstoffstange 39 bewegt, durch einen ebenfalls mit dem Flansch 38 verbundenen Trennerantrieb 40 angetrieben, die, stark schematisiert dargestellte, bewegliche Kontaktanordnung 41 des Trenners 30. Die bewegliche Kontaktanordnung 41 ist von einer dielektrisch wirksamen Abschirmung 42 umgeben, die von der Isolierstoffstange 39 durchdrungen wird.

An den Flansch 32 ist ein nicht bezeichnetes Sammelschienengehäuse angeflanscht. An den Flansch 33 ist ein Schottungsisolator 43 angeflanscht, der von einem Stromanschluss 44 durchdrungen wird. An den Stromanschluss 44 ist ein Leiterstück 45 angeschraubt, welches isolatorseitig von einer dielektrisch wirksamen Abschirmung 46 umhüllt wird. Das Leiterstück 45 erstreckt sich längs der Sammelschienenachse 12, die senkrecht zur Verbindungsachse 15 verläuft. Das Leiterstück 45 ist mit einem ersten feststehenden Kontaktträger 47 des Trenners 30 elektrisch leitend verbunden. In den Kontaktträger 47 ist ein Gleitkontakt 48 eingelassen, der für den Stromübergang von der beweglichen Kontaktanordnung 41 des Trenners 30 auf den Kontaktträger 47 vorgesehen ist. Der Gleitkontakt 48 ist konzentrisch zur Verbindungsachse 15 angeordnet, er ist mit Kontaktfingern, mit Kontaktlamellen oder mit Spiralkontakten versehen. Der Kontaktträger 47 ist konzentrisch zur Verbindungsachse 15 angeordnet. Der Kontaktträger 47 ist gleichzeitig als Teil der Sammelschienenaktivteile ausgebildet. Auf der dem Leiterstück 45 gegenüberliegenden Seite des Kontaktträgers 47 ist ein weiteres Leiterstück 49 angebracht, welches sich entlang der Sammelschienenachse 12 durch die mit dem Flansch 32 versehene Öffnung erstreckt. Der Stromanschluss 21 ist mit einem zweiten feststehenden Kontaktträger 50 des Trenners 30 elektrisch leitend verbunden. Das isolatorseitige Ende des Kontaktträgers 50 ist mit einer dielektrisch wirksamen Abschirmung 51 abgedeckt. Das dem Kontaktträger 47 zugewandte Ende des Kontaktträgers 50 ist mit einem konzentrisch zur Verbindungsachse 15 angeordneten Gegenkontakt 52 für die bewegliche Kontaktanordnung 41 des Trenners 30 versehen. Die Kontaktträger 47 und 50 sind dielektrisch günstig ausgeformt, etwaige Kanten sind abgerundet ausgeführt. Die Stromanschlüsse 44 und 21 liegen im Betrieb auf Hochspannungspotential und sind gegenüber der Metallkapselung der gasisolierten Schaltanlage isoliert.

In den Kontaktträger 50 ist zudem ein tulpenförmig ausgebildeter Gegenkontakt 53 eingelassen, der konzentrisch zu einer Einbauachse 54 angeordnet ist und der den Kontaktstift 55 des Erders 16 aufnimmt, wenn der Erder 16 geschlossen wird. Die Einbauachse 54 steht senkrecht auf der Verbindungsachse 15. Zwischen dem Kontaktträger 47 und dem Gegenkontakt 52 besteht bei offenem Trenner 30 ein Abstand 56. Dieser Abstand 56 entspricht der Trennstrecke des Trenners 30 die im Betrieb allen an dieser Stelle auftretenden betriebsbedingten Spannungsbeanspruchungen standhält.

Beim Einschalten des Trenners 30 wird durch die durch den Trennerantrieb 40 betätigte Isolierstoffstange 39 die bewegliche Kontaktanordnung 41 entlang der Verbindungsachse 15 auf den Gegenkontakt 52 zu bewegt. Eine gegebenenfalls durch Restladungen und/oder durch eine zwischen dem Kontaktträger 47 und dem Gegenkontakt 52 anliegende betriebsfrequente Spannung hervorgerufene Vorzündung zwischen der beweglichen Kontaktanordnung 41 und dem Gegenkontakt 52 wird durch den Trenner 30 einwandfrei beherrscht. Eine Ausweitung des Vorzündlichtbogens hin zur Wand des Gehäuses 29 kann, bedingt durch die geometrische Anordnung des Kontaktträgers 47 und des Gegenkontakts 52 nicht auftreten. Der Trennerantrieb 40 ist so ausgelegt, dass er in jedem möglichen Betriebsfall die bewegliche Kontaktanordnung 41 sicher in die vorgesehene Einschaltstellung bewegt, sodass eine einwandfreie Stromführung über die dafür vorgesehenen, nicht näher beschriebenen Nennstromkontakte gewährleistet ist. Ebenso erfolgt auch das Öffnen des Trenners 30 stets einwandfrei.

Hier ist der Erder 16 in die mit dem Flansch 34 versehene Öffnung eingebaut. Er könnte jedoch auch alternativ in die mit dem Flansch 35 versehene Öffnung eingebaut werden. An den Flansch 35 können beispielsweise Detektoren für die Überwachung der gasisolierten Schaltanlage oder, wie in Fig.3 gezeigt, eine Berstscheibe 57 druckdicht angeflanscht werden, die im Fehlerfall eine Druckentlastung des Gehäuses 29 ermöglicht. Die beiden Flansche 34 und 35 weisen eine gemeinsame Einbauachse 54 auf.

Das auf der anderen Seite des Gehäuseunterteils 18 angeflanschte Gehäuse 58 entspricht mit beinahe sämtlichen Einbauteilen dem Gehäuse 29, es ist lediglich spiegelbildlich zu diesem angeordnet, und es ist kein Erder eingebaut. Die mit einem Flansch 59 versehene Öffnung, in welche ein entlang einer Einbauachse 60 erstreckter Erder eingebaut werden könnte, ist mittels eines Deckels 61 druckdicht verschlossen. Ebenso ist auch der Gegenkontakt des Erders nicht eingebaut worden. Mit dem Stromanschluss 22 ist auf der dem Verbindungsstück 23 abgewandten Seite ein Kontaktträger 62 elektrisch leitend verbunden, der einen Gegenkontakt 63 des rechts angeordneten Trenners trägt. Der Einbau eines zweiten Erders ist hier nicht nötig, da der Gegenkontakt 63 und der Kontaktträger 62 stets, dank des elektrisch leitenden Kontaktrings 25, auf dem gleichen Potential liegen wie der Kontaktträger 50 und der Gegenkontakt 52, sodass es vollauf genügt, wenn diese Aktivteile bei Bedarf gemeinsam mit Hilfe des einzigen Erders 16 sicher geerdet werden.

Der Trenner 30 kann in jeder beliebigen Einbaulage eingebaut werden, die durch das Anlagenkonzept der metallgekapselten gasisolierten Schaltanlage vorgegeben wird. Der Erder 16 kann ebenfalls lageunabhängig betätigt werden, sodass auch von daher keine Einbaubeschränkungen bestehen. Der Erder 16 kann sowohl als Arbeitserder als auch als Schnellerder ausgebildet sein. Die Baugruppe Trenner 30 mit vorgeschaltetem Erder 16 ist sehr kompakt ausgeführt und beansprucht in Richtung der Verbindungsachse 15 besonders wenig Platz, sodass das Schaltfeld mit besonders kleinen Abbmessungen ausgeführt werden kann.

Die offene Trennstrecke des Trenners ist mittels SF₆ höchstzuverlässig isoliert. Der Trenner weist im geschlossenen Zustand eine optimale Nennstromtragfähigkeit, eine sehr gute Kurzschlussstromtragfähigkeit und Stossstromfestigkeit auf. Ferner weist er ein zuverlässiges Schaltvermögen bei kleinen kapazitiven Strömen auf, er beherrscht zudem das Umschalten bei einem unterbrechungslosen Sammelschienenwechsel.

Der Trenner 30 weist getrennte Kontaktsysteme für die Dauerstromführung und für den eigentlichen Schaltvorgang auf. Die Dauerstromkontakte sind einfach und zuverlässig konstruiert, sie weisen eine minimale Anzahl von Einzelteilen auf. Die Kontaktbewegung erfolgt mittels eines elektrisch betriebenen, ausserhalb des mit SF₆-Gas gefüllten Trennergehäuses angeordneten Trennerantriebs, der Trenner kann jedoch auch von Hand angetrieben werden. Eine derartige Konfiguration erleichtert die Wartungsarbeiten sehr vorteilhaft. Der Trenner ist mit einer mechanisch gekoppelten Stellungsanzeige versehen, ferner kann ein Schauglas vorgesehen werden für ein Endoskop zur Kontrolle der Position der Kontakte.

Die Fig.4 zeigt eine stark vereinfachte schematische Darstellung des in Fig.2 eingetragenen Schnittes B-B durch einen ersten Pol des Leistungsschalters 6. Dieser Pol weist ein metallisches, isoliergasgefülltes Polgehäuse auf, welches sich aus mehreren Komponenten zusammensetzt, die druckdicht miteinander verbunden sind. Das Polgehäuse weist ein unten mit einem Deckelflansch 64 verschlossenes Gehäuseunterteil 18 auf, welches bei allen drei Polen eines dreipoligen Leistungsschalters 6 gleich ausgebildet ist, welches jedoch in unterschiedlicher Einbaulage verwendet wird. In das Gehäuseunterteil 18 ist jeweils eine Kontaktierungsbaugruppe 65 eingebaut. Diese Kontaktierungsbaugruppe 65 besteht jeweils aus den im Zusammenhang mit Fig.3 beschriebenen Teilen wie dem Verbindungsstück 23 mit der Abschirmung 24, dem Kontaktring 25, der Kontaktanordnung 26 und dem Kontaktträger 27 mit der Abschirmung 28. Die Kontaktierungsbaugruppe 65 ist einerseits mit dem Stromanschluss 21 des Schottungsisolators 19 steckbar verbunden und andererseits mit dem Stromanschluss 22 des Schottungsisolators 20 fest verbunden. Der Leistungsschalterpol weist eine Löschkammer 66 auf, die ein zylindrisch ausgebildetes, aus Metall hergestelltes und konzentrisch zur Polachse 13 angeordnetes Auspuffgehäuse 67 aufweist, welches in die Kontaktierungsbaugruppe 65 eingefahren ist und mit dieser über Gleitkontakte wie beispielsweise Spiralkontakte elektrisch leitend verbunden ist. Das Auspuffgehäuse 67 überträgt das Potential der Kontaktierungsbaugruppe 65 auf den unteren Teil der Löschkammer 66 und führt bei geschlossenem Leistungsschalterpol gleichzeitig den Betriebsstrom.

Auf das Gehäuseunterteil 18 ist ein Gehäuseoberteil 68 aufgesetzt, welches eine mit einem Schottungsisolator 69 druckdicht verschlossene, nicht bezeichnete Öffnung aufweist. Der Schottungsisolator 69 weist einen ihn durchdringenden Stromanschluss 70 auf, der einerseits mit den nicht dargestellten, sich in Richtung der Längsachse 14 erstreckenden, Aktivteilen des Abgangs elektrisch leitend verbunden ist, und der andererseits über einen Messerkontakt 71 mit dem oberen Teil 72 der Löschkammer 66 verbunden ist. Der obere Teil 72 und der untere Teil der Löschkammer 66 werden durch einen Löschkammerisolator 73 zu einer Einheit verbunden. Der Löschkammerisolator 73 isoliert, wenn der Leistungsschalterpol ausgeschaltet ist, den oberen Teil 72 vom unteren Teil. Die Löschkammer 66 ist mittels eines Halteisolators 74 mit einem Gehäusedeckel 75 verbunden und wird durch diesen im Zentrum des Polgehäuses gehalten. Der Gehäusedeckel 75 wird mit dem Gehäuseoberteil 68 verbunden und schliesst das Polgehäuse nach oben ab. Der Gehäusedeckel 75 ist mit einer Berstscheibe 76 versehen, die im Notfall einen im Polgehäuse entstehenden Überdruck in die Umgebung entweichen lässt. An den Gehäusedeckel 75 ist ein Antrieb 77 für den Leistungsschalterpol angeflanscht. Der Antrieb 77 sitzt nicht auf der Polachse 13, er ist neben dem Polgehäuse angeordnet, und zwar auf der dem Abgang zum Kabelanschluss 10 entgegengesetzten Seite des Polgehäuses. Die Bauhöhe des Leistungsschalterpols wird so durch den Antrieb 77 nicht oder nur unwesentlich vergrössert. Der Antrieb 77 wirkt über eine schematisch angedeutete Kraftumsetzung auf eine isolierende Betätigungsstange 78 ein, welche die beweglichen Kontaktteile der Löschkammer 66 entlang der Polachse 13 bewegt. Bei der Montage wird die an dem Gehäusedeckel 75 hängende Löschkammer 66 von oben in das Polgehäuse so eingeführt, dass das Auspuffgehäuse 67 mit der Kontaktierungsbaugruppe 65 einwandfrei Kontakt bekommt, und dass der Messerkontakt 71 ebenfalls die Aktivteile des Abgangs zuverlässig mit dem oberen Teil 72 der Löschkammer 66 elektrisch verbindet.

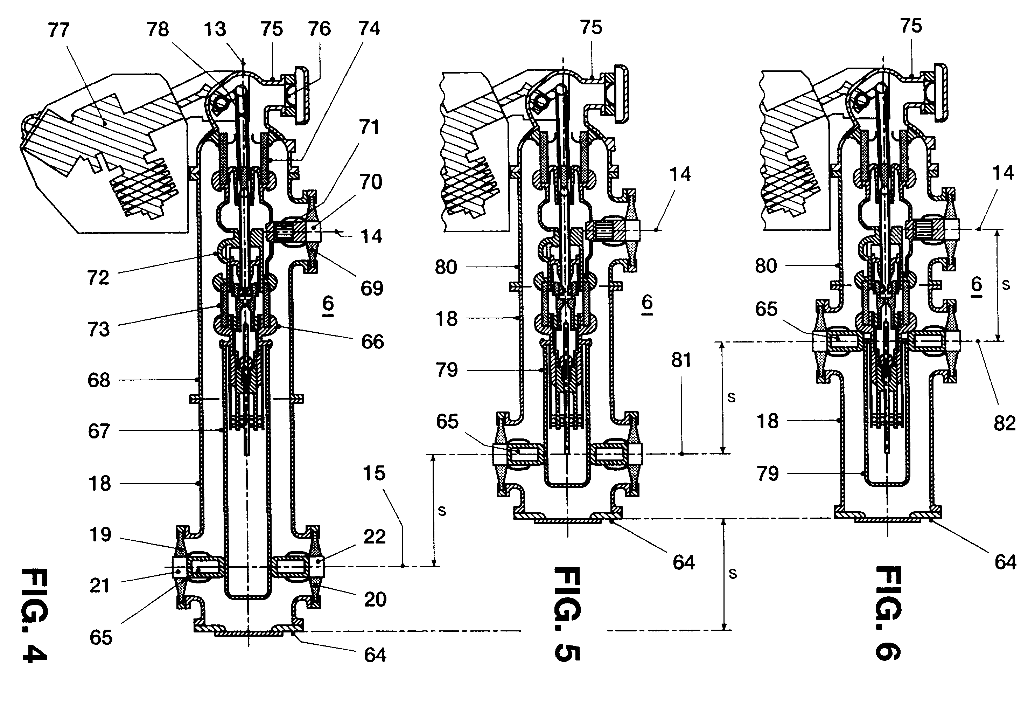

Die Fig.5 zeigt eine schematische Darstellung des in Fig.2 eingetragenen Schnittes C-C durch einen zweiten Leistungsschalterpol. Dieser Leistungsschalterpol weist ebenfalls ein metallisches, isoliergasgefülltes Polgehäuse auf, welches sich aus mehreren Komponenten zusammensetzt, die druckdicht miteinander verbunden sind. Die Längsachse 14 des Abgangs ist bei diesem Pol auf gleicher Höhe wie bei dem vorab beschriebenen Pol. Dieses Polgehäuse weist ein unten mit einem Deckelflansch 64 verschlossenes Gehäuseunterteil 18 auf, welches bei allen drei Polen des dreipoligen Leistungsschalters 6 gleich ausgebildet ist. Hier ist es in der gleichen Einbaulage eingebaut wie in dem Pol gemäss Fig. 4. In das Gehäuseunterteil 18 ist hier die gleiche Kontaktierungsbaugruppe 65 eingebaut. Die Kontaktierungsbaugruppe 65 stellt die elektrisch leitende Verbindung her zu einem Auspuffgehäuse 79. Das Gehäuseunterteil 18 ist mit einem Gehäuseoberteil 80 verbunden. Das Gehäuseoberteil 80 ist gegenüber dem entsprechenden Gehäuseoberteil 68 in Fig.4 und das Auspuffgehäuse 79 ist gegenüber dem entsprechenden Auspuffgehäuse 67 in Fig.4 jeweils um ein gleiches Mass s gekürzt ausgeführt. Das Mass s entspricht dem senkrechten Achsabstand der Sammelschienen 5. Die übrigen Bauelemente der beiden Schalterpole des Leistungsschalters 6 sind gleich ausgeführt.

Die Verkürzung der erwähnten Bauteile um das Mass s hat zur Folge, das der Leistungsschalterpol gemäss Fig.5 um eben dieses Mass s kürzer ist, und dass der Sammelschienenanschluss dieses Pols, der sich entlang einer Verbindungsachse 81 erstreckt, gegenüber der Verbindungsachse 15 um das Mass s nach oben versetzt ist.

Die Fig.6 zeigt eine schematische Darstellung des in Fig.2 eingetragenen Schnittes D-D durch einen dritten Pol des Leistungsschalters 6. Dieser Leistungsschalterpol weist ein metallisches, isoliergasgefülltes Polgehäuse auf, welches sich aus mehreren Komponenten zusammensetzt, die druckdicht miteinander verbunden sind. Die Längsachse 14 des Abgangs ist bei diesem Pol auf gleicher Höhe wie bei den beiden vorab beschriebenen Polen. Das Polgehäuse weist ein unten mit einem Deckelflansch 64 verschlossenes Gehäuseunterteil 18 auf, welches bei allen drei Polen des dreipoligen Leistungsschalters 6 genau gleich ausgebildet ist, welches bei diesem Pol jedoch um 180° gedreht gegenüber der Einbaulage in den anderen beiden Leistungsschalterpolen verwendet wird. In das Gehäuseunterteil 18 ist jeweils eine Kontaktierungsbaugruppe 65 eingebaut. Auch dieser Pol ist gegenüber dem Pol gemäss Fig.4 um dass Mass s kürzer.

Die Drehung des Gehäuseunterteils 18 um einen Winkel von 180° um eine parallel zu Verbindungsachse 82 verlaufende Achse hat zur Folge, dass der Sammelschienenanschluss dieses Pols, der sich entlang einer Verbindungsachse 82 erstreckt, gegenüber der Verbindungsachse 15 um zwei Mal das Mass s nach oben versetzt ist, und gegenüber der Verbindungsachse 81 um eben dieses Mass s nach oben versetzt ist. Die Verbindungsachse 82 weist zur Längsachse 14, die bei allen drei Leistungsschalterpolen in gleicher Höhe angeordnet ist, einen Abstand auf, der dem Mass s entspricht.

Der Pol gemäss Fig.4 ist, wie aus Fig.1 ersichtlich, auf dem Tragrahmen 2 befestigt. Die anderen beiden Pole, die beide um das Mass s kürzer sind, werden auf einem mit dem Tragrahmen 2 verbundenen Podest, welches so hoch ist, dass der erwähnte Massunterschied ausgeglichen wird, montiert. Das Podest ist aus Profileisen zusammengeschweisst, es ist sehr preisgünstig und mit wenig Aufwand zu erstellen. Ausser dem Podest, dem um das Mass s verlängerten Gehäuseoberteil 68 und dem um ebenfalls das Mass s verlängerten Auspuffgehäuse 67 sind keine weiteren modifizierten Bauteile nötig, um die bei einer konventionell aufgebauten metallgekapselten gasisolierten Schaltanlage stets benutzten, unterschiedlich langen und aufwendigen Verbindungsstücke zwischen den Leistungsschalterpolen und den diesen zugeordneten Sammelschienen überflüssig zu machen.

Bei der erfindungsgemässen metallgekapselten gasisolierten Schaltanlage sind die Polachsen 13 in einer Ebene angeordnet. Die Polachsen 13 verlaufen senkrecht zum Fundament 4. Die Sammelschienenachsen 12 eines Sammelschienensystems sind ebenfalls in einer Ebene senkrecht zum Fundament 4 angeordnet, doch verlaufen die Sammelschienenachsen 12 parallel zu der Oberfläche des Fundaments 4. Wird eine gasisolierte Schaltanlage mit nur einem Sammelschienensystem erstellt, so kann dieses wahlweise auf der einen oder auf der anderen Seite der Ebene der Polachsen 13 des Leistungsschalters 6 angeordnet werden. Für spezielle Anwendungsfälle ist es auch möglich, nur eine der Sammelschienen des Systems auf der gegenüberliegenden Seite der Ebene der Polachsen 13 zu führen. Wird die gasisolierte Schaltanlage mit einem Doppelsammelschienensystem ausgerüstet, so werden die Sammelschienensysteme in der Regel zu beiden Seiten der Ebene der Polachsen 13 des Leistungsschalters 6 und in gleichem Abstand zu dieser angeordnet. Durch diese Zuordnung der Sammelschienen 5 in zu den Polachsen 13 der Leistungsschalter 6 parallele Ebenen ist eine besonders platzsparende Anordnung der Sammelschienenanschlüsse möglich, sie können auf einer Diagonalen angeordnet werden.

Eine besonders kompakte Anordnung der gasisolierten Schaltanlage ergibt sich dann, wenn der Abstand zwischen benachbarten Sammelschienenachsen 12, der dem Mass s entspricht, gleich gross wie der Abstand zwischen benachbarten Polachsen 13 gewählt wird. Die Verbindungslinie zwischen den Verbindungsachsen 15,81 und 82 weist dann gegenüber der Richtung der Sammelschienenachsen 12 einen Winkel von 45° auf. Durch diese Anordnung der Anschlüsse wird eine erhöhte Flexibilität bei der Projektierung von metallgekapselten gasisolierten Schaltanlagen erreicht und zudem eine vorteilhafte Reduzierung der Anzahl der für diese gasisolierten Schaltanlagen benötigten Bauteile.

Die beschriebenen Veränderungen der Baulänge des Polgehäuses des Pols gemäss Fig.4 können auch auf andere Art erreicht werden. Anstatt des verlängerten Gehäuseoberteils 68 kann beispielsweise ein kürzeres Gehäuseoberteil 80 eingebaut werden, wie es in den anderen beiden Polen eingesetzt ist, nur muss dann entweder das Gehäuseunterteil in diesem Pol entsprechend nach oben verlängert oder ein entsprechend bemessener Zwischenring zwischen dem kürzeren Gehäuseoberteil 80 und dem Gehäuseunterteil 18 eingefügt werden.

### BEZEICHNUNGSLISTE

- 1: Abgangsfeld
- 2: Tragrahmen
- 3: Winkelprofile
- 4: Fundament
- 5: Sammelschienen
- 6: Leistungsschalter
- 7: Stromwandler
- 8: Trenner
- 9: Spannungswandler
- 10: Kabelanschluss
- 11: Hochspannungskabel
- 12: Sammelschienenachsen
- 13: Polachse
- 14: Längsachse
- 15: Verbindungsachse
- 16: Erder
- 17: zentraler Punkt
- 18: Gehäuseunterteil
- 19,20: Schottungsisolator
- 21,22: Stromanschluss
- 23: Verbindungsstück
- 24: Abschirmung
- 25: Kontaktring
- 26: Kontaktanordnung
- 27: Kontaktträger
- 28: Abschirmung 28
- 29: Gehäuse
- 30: Trenner
- 31 bis 35: Flansch
- 36: Abdeckung
- 37,38: Flansch
- 39: Isolierstoffstange
- 40: Trennerantrieb
- 41: bewegliche Kontaktanordnung
- 42: Abschirmung
- 43: Schottungsisolator
- 44: Stromanschluss
- 45: Leiterstück
- 46: Abschirmung
- 47: Kontaktträger
- 48: Gleitkontakt
- 49: Leiterstück
- 50: Kontaktträger
- 51: Abschirmung
- 52,53: Gegenkontakt
- 54: Einbauachse
- 55: Kontaktstift
- 56: Abstand
- 57: Berstscheibe
- 58: Gehäuse
- 59: Flansch
- 60: Einbauachse
- 61: Deckel
- 62: Kontaktträger
- 63: Gegenkontakt
- 64: Deckelflansch
- 65: Kontaktierungsbaugruppe
- 66: Löschkammer
- 67: Auspuffgehäuse
- 68: Gehäuseoberteil
- 69: Schottungsisolator
- 70: Stromanschluss
- 71: Messerkontakt
- 72: oberer Teil
- 73: Löschkammerisolator
- 74: Halteisolator
- 75: Gehäusedeckel
- 76: Berstscheibe
- 77: Antrieb
- 78: Betätigungsstange
- 79: Auspuffgehäuse
- 80: Gehäuseoberteil
- 81,82: Verbindungsachse
- s: Achsabstand der Sammelschiene

## Patentansprüche

1. Einphasig metallgekapselte gasisolierte Schaltanlage mit mindestens einem Sammelschienensystem, welches einen Achsabstand (s) und parallel zu einer Oberfläche eines Fundaments (4) verlaufende Sammelschienenachsen (12) aufweist, wobei die Sammelschienenachsen in mindestens einer ersten, senkrecht zur Oberfläche des Fundaments (4) angeordneten, Ebene liegen, mit einem Leistungsschalter (6), der pro Pol jeweils eine Polachse (13), mindestens eine in ein Polgehäuse eingebaute Löschkammer (66) und mindestens einen auf einer Verbindungsachse (15,81,82) liegenden Anschluss für die dem betreffenden Pol jeweils zugeordnete Sammelschiene des Sammelschienensystems aufweist und dessen Polachsen (13) senkrecht zu der Oberfläche des Fundaments (4) angeordnet sind und in einer zweiten, parallel zu der mindestens einen ersten Ebene angeordneten, Ebene liegen, mit jeweils einem entlang der Verbindungsachse (15,81,82) erstreckten elektrisch leitenden Verbindungsteil, welches den mindestens einen Anschluss des jeweiligen Pols mit dem mindestens einen der Sammelschienensysteme verbindet, wobei die Anschlüsse für die Sammelschienen (5) auf einer Diagonalen liegen, mit jeweils einem in der Verbindung zwischen der mindestens einen Sammelschiene (5) und dem Pol angeordneten Trenner (30), dadurch gekennzeichnet,
- dass jedes der Polgehäuse eines dreipoligen Leistungsschalters (6) jeweils aus einem mit dem mindestens einen Anschluss für die Sammelschienen (5) versehenen Gehäuseunterteil (18), mindestens einem Gehäuseoberteil (68,80) und einem Gehäusedeckel (75) aufgebaut ist,
- dass der Gehäusedeckel (75) als Gleichteil in jedem der Polgehäuse eingebaut ist,
- dass das Gehäuseunterteil (18) als Gleichteil zuunterst in jedem der Polgehäuse eingebaut ist, jedoch nicht stets in gleicher Einbaulage, und
- dass ein erster Pol gegenüber den anderen beiden Polen ein um den Betrag des Achsabstands (s) verlängertes Gehäuseoberteil (68) und entsprechend verlängerte elektrisch leitende Aktivteile der Löschkammer (66) aufweist.

2. Einphasig metallgekapselte gasisolierte Schaltanlage nach Anspruch 1, dadurch gekennzeichnet,
- dass zwei Sammelschienensysteme jeweils in einer ersten Ebene und in einer dritten Ebene angeordnet sind, und
- dass die zweite Ebene, in welcher die Polachsen (13) liegen, in der Mitte zwischen der ersten und der dritten Ebene angeordnet ist.

3. Einphasig metallgekapselte gasisolierte Schaltanlage nach Anspruch 1 oder 2, dadurch gekennzeichnet,
- dass jeder Anschluss für die Sammelschienen (5) mit einem entlang der senkrecht zu diesen Ebenen verlaufenden Verbindungsachsen (15,81,82) sich erstreckenden Verbindungsteil verbunden ist, und
- dass alle diese Verbindungsteile die gleiche Baulänge aufweisen.

4. Einphasig metallgekapselte gasisolierte Schaltanlage nach einem der Ansprüche 1 bis 3, dadurch gekennzeichnet,
- dass der Anschluss für die Sammelschienen (5) so in das Gehäuseunterteil (18) eingebaut ist, dass er, wenn das Gehäuseunterteil (18) um 180° um eine parallel zur Verbindungsachse (15,81,82) verlaufende Achse gedreht wird, um den Achsabstand (s) in Richtung der Polachse versetzt wird.

5. Einphasig metallgekapselte gasisolierte Schaltanlage nach einem der Ansprüche 1 bis 4, dadurch gekennzeichnet,
- dass der erste Pol um den Achsabstand (s) länger ausgebildet ist als die beiden übrigen Pole, wobei das Gehäuseunterteil (18) in diesen ersten Pol so eingebaut ist, dass der Anschluss für die Sammelschienen (5) unten liegt,
- dass in einen dem ersten benachbarten zweiten Pol das Gehäuseunterteil (18) so eingebaut ist, dass der Anschluss für die Sammelschienen (5) unten liegt, und
- dass in einen dem zweiten benachbarten dritten Pol das Gehäuseunterteil (18) so gedreht eingebaut ist, dass der Anschluss für die Sammelschienen (5) oben liegt.

6. Einphasig metallgekapselte gasisolierte Schaltanlage nach Anspruch 5, dadurch gekennzeichnet,
- dass beim ersten Pol anstatt des verlängerten Gehäuseoberteils (68) ein kürzeres Gehäuseoberteil (80), wie es in den anderen beiden Polen eingesetzt ist, eingebaut wird, und
- dass dann das Gehäuseunterteil (18) entsprechend verlängert oder ein entsprechend bemessener Zwischenring zwischen dem kürzeren Gehäuseoberteil (80) und dem Gehäuseunterteil (18) eingefügt wird.

7. Einphasig metallgekapselte gasisolierte Schaltanlage nach Anspruch 1, dadurch gekennzeichnet,
- dass der erste Pol direkt auf einem Tragrahmen (2) befestigt ist, und
- dass die beiden anderen Pole auf einem gemeinsamen, mit dem Tragrahmen (2) verbundenen Podest, welches um den Achsabstand (s) höher als der Tragrahmen (2) ist, befestigt sind.

8. Einphasig metallgekapselte gasisolierte Schaltanlage nach einem der Ansprüche 1 bis 7, dadurch gekennzeichnet,
- dass mindestens ein Gehäuseoberteil (68,80) um einen Winkel um die betreffende Polachse (13) gedreht einbaubar ist, wobei dieser Winkel im Bereich um 180° liegt.

## Claims

1. Single-phase, metal-encapsulated, gas-insulated switching installation having at least one busbar system which has an axis separation (s) and busbar axes (12) running parallel to a surface of a foundation (4), the busbar axes lying in at least one first plane arranged at right angles to the surface of the foundation (4), having a circuit breaker (6) which, per pole, in each case has one pole axis (13), at least one quenching chamber (66) installed in a pole enclosure and at least one connection, located on a connecting axis (15, 81, 82), for that busbar of the busbar system which is respectively associated with the particular pole and whose pole axes (13) are arranged at right angles to the surface of the foundation (4) and lie in a second plane arranged parallel to the at least one first plane, having in each case one electrically conductive connecting part which extends along the connecting axis (15, 81, 82) and connects the at least one connection of the respective pole to at least one of the busbar systems, the connections for the busbars (5) lying on a diagonal, having in each case one isolator (30) which is arranged in the connection between the at least one busbar (5) and the pole, characterized
- in that each of the pole enclosures of a three-pole circuit breaker (6) is constructed from in each case one enclosure lower part (18), which is provided with the at least one connection for the busbars (5), at least one enclosure upper part (68, 80) and an enclosure cover (75),
- in that the enclosure cover (75) is installed in each of the pole enclosures as an identical part, and
- in that the enclosure lower part (18) is installed at the bottom in each of the pole enclosures as an identical part, but not always in the same installed position, and
- in that in comparison with the other two poles, a first pole has an enclosure upper part (68), which is extended by the amount of the axis separation (s), and correspondingly extended electrically conductive active parts of the quenching chamber (66).

2. Single-phase, metal-encapsulated, gas-insulated switching installation according to Claim 1, characterized
- in that two busbar systems are arranged respectively in a first plane and in a third plane, and
- in that the second plane in which the pole axes (13) lie is arranged in the centre between the first plane and the third plane.

3. Single-phase, metal-encapsulated, gas-insulated switching installation according to Claim 1 or 2, characterized
- in that each connection for the busbars (5) is connected to a connecting part which extends along connecting axes (15,81,82) which run at right angles to these planes, and
- in that all these connecting parts have the same physical length.

4. Single-phase, metal-encapsulated, gas-insulated switching installation according to one of Claims 1 to 3 characterized
- in that the connection for the busbars (5) is installed in the enclosure lower part (18) such that it is offset by the axis separation (s) in the direction of the pole axis when the enclosure lower part (18) is rotated through 180° about an axis which runs parallel to the connecting axis (15, 81, 82).

5. Single-phase, metal-encapsulated, gas-insulated switching installation according to one of claims 1 to 4, characterized
- in that the first pole is constructed to be longer by the axis separation (s) than the two other poles, the enclosure lower part (18) being installed in this first pole such that the connection for the busbars (5) is located at the bottom,
- in that the enclosure lower part (18) is installed in a second pole adjacent to the first such that the connection for the busbars (5) is located at the bottom, and
- in that the enclosure lower part (18) is installed rotated in a third pole such that the connection for the busbars (5) is located at the top.

6. Single-phase, metal-encapsulated, gas-insulated switching installation according to Claim 5, characterized
- in that in the case of the first pole, a shorter enclosure upper part (80) is installed than that which is used in the other two poles, instead of the extended enclosure upper part (68), and
- in that the enclosure lower part (18) is then correspondingly extended, or a correspondingly dimensioned intermediate ring is inserted between the shorter enclosure upper part (80) and the enclosure lower part (18).

7. Single-phase, metal-encapsulated, gas-insulated switching installation according to Claim 1, characterized
- in that the first pole is mounted directly on a supporting frame (2), and
- in that the two other poles are mounted on a common platform, which is higher, by the axis separation (s), than the supporting frame (2).

8. Single-phase, metal-encapsulated, gas-insulated switching installation according to one of Claims 1 to 7, characterized
- in thatat least one enclosure upper part (68, 80) can be installed rotated through an angle about the particular pole axis (13), this angle being in the region of 180°.

## Revendications

1. Installation de commutation à blindage métallique monophasé et à isolement gazeux comprenant au moins un système de barres omnibus, qui présente une distance axiale (s) et des axes (12) s'étendant parallèlement à une surface d'une plaque de fondation (4), les axes des barres omnibus se trouvant dans au moins un premier plan agencé perpendiculairement à la surface de la plaque de fondation (4), avec un disjoncteur de puissance (6), qui présente pour chaque pôle, respectivement, un axe polaire (13), au moins une chambre d'extinction (66) encastrée dans un boîtier polaire et au moins une connexion se trouvant sur un axe de jonction (15, 81, 82) pour les barres omnibus du système de barres omnibus affectées respectivement au pôle concerné et dont les axes polaires (13) sont agencés perpendiculairement à la surface de la plaque de fondation (4) et se trouvent dans un deuxième plan agencé parallèlement au au moins un premier plan, avec respectivement un connecteur conducteur de l'électricité s'étendant le long de l'axe de jonction (15, 81, 82), ledit connecteur connectant la au moins une connexion du pôle respectif au au moins un des systèmes de barres omnibus, les connexions pour les barres omnibus (5) se trouvant sur une diagonale, avec respectivement un sectionneur (30) agencé dans la connexion entre la au moins une barre omnibus (5) et le pôle, caractérisée en ce que :
- chaque boîtier polaire d'un disjoncteur de puissance (6) tripolaire est constitué respectivement d'une partie inférieure (18) pourvue de la au moins une connexion pour les barres omnibus (5), d'au moins une partie supérieure (68, 80) et d'un couvercle de boîtier (75),
- le couvercle de boîtier (75) est encastré de la même manière dans chaque boîtier polaire,
- la partie inférieure (18) du boîtier est encastrée de la même manière par en dessous dans chaque boîtier polaire, mais pas toujours dans la même position de montage, et
- un premier pôle présente vis-à-vis des autres deux pôles une partie supérieure (68) prolongée de la distance axiale (s) et des parties actives de la chambre d'extinction (66) conductrices de l'électricité et prolongées de manière correspondante.

2. Installation de commutation à blindage métallique monophasé et isolement gazeux selon la revendication 1, caractérisée en ce que :
- deux systèmes de barres omnibus sont respectivement agencés dans un premier plan et dans un troisième plan, et
- le deuxième plan, dans lequel les axes polaires (13) se trouvent, est agencé au centre entre le premier et le troisième plans.

3. Installation de commutation à blindage métallique monophasé et isolement gazeux selon la revendication 1 ou 2, caractérisée en ce que :
- chaque connexion pour les barres omnibus (5) est connectée à un connecteur s'étendant le long des axes de jonction (15, 81, 82) s'étendant perpendiculairement à ces plans, et
- tous les connecteurs présentent la même longueur de montage.

4. Installation de commutation à blindage métallique monophasé et isolement gazeux selon l'une quelconque des revendications 1 à 3, caractérisée en ce que :
- la connexion pour les barres omnibus (5) est encastrée dans la partie inférieure (18) du boîtier de sorte que, lorsque la partie inférieure (18) du boîtier est soumise à une rotation de 180° autour d'un axe s'étendant parallèlement à l'axe de jonction (15, 81, 82), elle soit décalée de la distance axiale (s) dans la direction de l'axe polaire.

5. Installation de commutation à blindage métallique monophasé et isolement gazeux selon l'une quelconque des revendications 1 à 4, caractérisée en ce que :
- le premier pôle est plus long de la distance axiale (s) que les deux autres pôles, la partie inférieure (18) du boîtier étant encastrée dans ce premier pôle de telle sorte que la connexion pour les barres omnibus (5) se trouve en dessous,
- la partie inférieure (18) du boîtier est encastrée dans un deuxième pôle voisin du premier de telle sorte que la connexion pour les barres omnibus (5) se trouve en dessous, et
- la partie inférieure (18) du boîtier est encastrée dans un troisième pôle voisin du deuxième après rotation de façon à tourner de telle sorte que la connexion pour les barres omnibus (5) se trouve au-dessus.

6. Installation de commutation à blindage métallique monophasé et isolement gazeux selon la revendication 5, caractérisée en ce que :
- dans le premier pôle est encastrée, au lieu de la partie supérieure (68) allongée du boîtier, une partie supérieure (80) plus courte, comme on en utilise dans les deux autres pôles, et
- la partie inférieure (18) du boîtier est prolongée de manière correspondante ou un anneau intermédiaire dimensionné de manière correspondante est ajusté entre la partie supérieure plus courte (80) du boîtier et la partie inférieure (18) du boîtier.

7. Installation de commutation à blindage métallique monophasé et isolement gazeux selon la revendication 1, caractérisée en ce que :
- le premier pôle est fixé directement à un châssis de support (2), et
- les deux autres pôles sont fixés sur une plate-forme commune reliée au châssis de support (2) qui est plus haute que le châssis de support (2) de la distance axiale (s).

8. Installation de commutation à blindage métallique monophasé et isolement gazeux selon l'une quelconque des revendications 1 à 7, caractérisée en ce que :
- au moins une partie supérieure (68, 80) du boîtier peut être encastrée par rotation d'un certain angle autour de l'axe polaire concerné (13), cet angle polaire se situant autour de 180°.
